# EUROPÄISCHE PATENTSCHRIFT

(11) **EP 0 893 084 B1**
(45) Veröffentlichungstag und Bekanntmachung des Hinweises auf die Patenterteilung: **05.11.2003**
(21) Anmeldenummer: 98113080.0
(22) Anmeldetag: 14.07.1998
(51) Int. Cl.: A47J 27/16

(54) **Dampfgarofen mit einer Dampferzeugereinheit**
Steam cooking oven with a steam-generator
Four de cuisson à vapeur avec un générateur de vapeur

(30) Priorität: 23.07.1997 DE 19731544
(43) Veröffentlichungstag der Anmeldung: 27.01.1999
(73) Patentinhaber: BSH Bosch und Siemens Hausgeräte GmbH, 81669 München (DE)
(72) Erfinder: Strolz, Bernd, 76456 Kuppenheim (DE); Anschütz, Eduard, 76571 Gaggenau (DE)
(74) Vertreter: Richter, Harald, Dr.

(56) Entgegenhaltungen:
- EP-A- 0 233 535
- EP-A- 0 523 489
- EP-A- 0 640 310

## Beschreibung

Die Erfindung betrifft einen Dampfgarofen mit einem Dampfgarraum gemäß dem Oberbegriff des Patentanspruches 1.

Aus EP 0 233 535 ist ein gattungsgemäßer Dampfgarofen bekannt, in dem eine Austrittsöffnung der Wasserzuführung über einer Nabe derart angebracht ist, dass ausströmendes Wasser von oben auf die Nabe fließt. Die Nabe wirkt als ein Zerstäuber.

Aus EP 0 523 489 ist ein Dampfgarofen bekannt, in dem Wasser auf eine Innenmantelfläche eines Rotationshohlkörpers geführt wird und von dort radial in Richtung auf ein Heizelement weggeschleudert wird.

Dampfgaröfen sind Öfen, in denen Speisen in heißem Wasserdampf gegart werden. Sie weisen einen von einem Gehäuse umgebenen, durch eine Tür verschiebbaren Dampfgarraum auf, in den die Speisen hineingegeben werden.

Der benötigte Dampf wird durch eine Dampferzeugereinheit erzeugt, die üblicherweise in dem Dampfgarraum angeordnet ist. In der DE-U1 8717935 ist eine Dampferzeugereinheit beschrieben, bei der das Wasser durch eine Wasserzuführungsleitung auf die Mantelfläche eines zylinderförmigen Rotationskörpers aufgebracht wird, der die Nabe eines rotierenden Gebläse-Schaufelrades bildet. Die Nabe rotiert mit hoher Geschwindigkeit, so dass auf sie auftreffendes Wasser zerstäubt wird. Durch die in der Flugbahn des Wassers angeordneten Schaufeln des Lüfterrades wird eine zusätzliche Zerstäubung bewirkt. Das fein verteilte Wasser trifft auf einen großflächig das Gebläse-Schaufelrad umgebenden Heizkörper auf und wird dort rasch verdampft. In der DE-PS 4007198 wird ein hierzu geeigneter Spezialheizkörper mit einer mäanderförmigen Heizwendel beschrieben.

Die Lufttemperatur und der Wasserdampfgehalt der Luft, der wiederum von der Lufttemperatur abhängig ist, haben als Garfaktoren entscheidenden Einfluss auf den Garvorgang. Bei einem mit atmosphärischem Druck arbeitenden Dampfgarofen, auf den sich die Erfindung vorzugsweise bezieht, wird in der Regel angestrebt, mit 100 °C heißem Wasserdampf zu garen. Temperaturschwankungen sind unerwünscht. Bei niedrigeren Temperaturen ist der Gareffekt schlechter. Höhere Temperaturen (bei gleichzeitig hoher Wasserzufuhr) führen zu Überdruck und damit zum Austritt von Wasserdampfschwaden in die Küche.

Der Erfindung liegt unter Berücksichtigung des genannten Standes der Technik die Aufgabe zugrunde, einen Dampfgarofen mit einer verbesserten Dampferzeugereinheit zu schaffen, die kostengünstig herzustellen ist und bei der die Garfaktoren im Betrieb des Ofens geringere Schwankungen zeigen.

Diese Aufgabe wird durch einen Dampfgarofen mit den Merkmalen des Patentanspruches 1 gelöst. Gemäß dem Kennzeichnungsteil des Patentanspruches 1 weist die Außenmantelfläche des Rotationskörpers in axialer Richtung eine mindestens abschnittsweise in Richtung auf die Drehachse geneigte ringförmige Wasserführungsfläche auf, die einerseits von einem Wasseraufgabekreis und andererseits von einem Schleuderkreis begrenzt wird, wobei der Radius des Wasseraufgabekreises kleiner als der Radius des Schleuderkreises ist. Die Wasserzuführungsleitung ist so ausgebildet, daß das Wasser bei dem Wasseraufgabekreis auf die Außenmantelfläche auftrifft und über die Wasserführungsfläche in Richtung auf den Schleuderkreis geführt wird. An dem Schleuderkreis weist die Außenmantelfläche eine Abreißkante auf, so daß das Wasser an dem Schleuderkreis van dem Rotationskörper weggeschleudert wird. Der Heizkörper fluchtet in radialer Richtung mit dem Schleuderkreis derartig, daß von dem Schleuderkreis weggeschleudertes Wasser auf ihn auftrifft.

Im Rahmen der Erfindung wurde festgestellt, daß das abgeschleuderte Wasser durch die Wasserführungsfläche und die Abreißkante derart präzise auf den Heizkörper fokussiert wird, daß dieser im Vergleich zum Stand der Technik eine kleine Oberfläche haben kann. Der Rotationskörper bewirkt somit eine gerichtete Verteilung des Wassers auf den Heizkörper, der ihn im wesentlichen in der Ebene des Schleuderkreises ringförmig umgibt. Der Rotationskörper wird deshalb nachfolgend als Verteilerrad bezeichnet.

Die Anordnung des Heizkörpers muß selbstverständlich an die Flugbahn des abgeschleuderten Wassers angepaßt sein, die durch eine in dem Dampfgarraum vorhandene Luftströmung sowie durch die Formgebung der Wasserführungsfläche und der Abreißkante in Verbindung mit der Drehzahl des Verteilerrades aus der exakten geometrischen Ebene des Schleuderkreises abgelenkt wird. Vorzugsweise umgibt er das Verteilerrad nahezu vollständig, um eine möglichst weitgehende Verdampfung des Wassers zu gewährleisten.

Durch die im Vergleich zum Stand der Technik mögliche kleinere Oberfläche wird der nicht vom abgeschleuderten Wasser getroffene (insbesondere an der von dem Verteilerrad abgewandten Seite gelegene) Oberflächen-Anteil verringert. An diesen Stellen gibt der Heizkörper Wärmestrahlung ab, die keinen Wasserdampf erzeugt, sondern die Luft aufheizt. Die damit verbundene Gefahr einer unerwünschten Temperaturerhöhung und damit von Schwankungen der Wasserdampfsättigung der Luft wird durch die Erfindung verringert. Dies wirkt sich vorteilhaft auf den Garvorgang aus.

Durch die Ausrichtung des abgeschleuderten Wassers auf den Heizkörper wird ferner erreicht, daß die tatsächlich auf ihn auftreffende Wassermenge weniger schwankt als bei bekannten Dampfgaröfen, bei denen das Wasser ungerichtet zerstäubt wird. Darüber hinaus wird durch das fokussierte Abschleudern des Wassers ohne Zeretäubungsschritt der an dem Heizkörper vorbeigeschleuderte Wasseranteil verringert. Dadurch wird der Wasserverbrauch erniedrigt. Die Gefahr einer Überhitzung und damit Zerstörung des Heizkörpers ist reduziert.

Bei dem Heizkörper handelt es sich vorzugsweise um einen bei Heißluftbacköfen handelsüblichen Heizkörper. Dadurch kann in Vergleich zum Stand der Technik auf einen aufwendigen Spezialheizkörper verzichtet werden, wodurch die Herstellungskosten reduziert werden. Außerdem besteht dadurch die Möglichkeit, kostengünstig ein Kombinationsgerät herzustellen, das wahlweise als Dampfgarofen und als Heizluftbackofen betrieben werden kann.

Um die bei einem Dampfgarofen gebräuchliche Leistung zu erzielen, ist in der Regel ein Heizkörper mit mehreren Heizringen notwendig. Im Haushaltsbereich werden bevorzugt Dampfgaröfen mit zwei Heizringen zur Dampferzeugung eingesetzt, die eine gebräuchliche Leistung von ca. 1800 W erzielen. Zur Verwendung in einem derartigen Gerät weist das Verteilerrad bevorzugt zwei Wasserführungsflächen auf, deren Schleuderkreise in radialer Richtung derartig mit den zwei Heizringen des Heizkörpers fluchten, daß von diesen weggeschleudertes Wasser auf den jeweils zugeordneten Heizring auftrifft. Bevorzugt sind die beiden Wasserführungsfläche einander zugewandt, so daß zwischen beiden Schleuderkreisen eine Vertiefung gebildet wird, deren mindestens abschnittsweise geneigte Wand die beiden Wasserführungsflächen bildet.

In den Zeichnungen sind Ausführungsbeispiele des erfindungsgemäßen Dampfgarofens schematisch dargestellt; es zeigen:
- Fig. 1: Eine perspektivische Frontansicht eines Dampfgarofens,
- Fig. 2: einen Axialschnitt durch eine erste Ausführungsform der Dampferzeugereinheit,
- Fig. 3: einen Ausschnitt zu Fig. 2, Fig. 4 eine perspektivische Darstellung eines Stromteilers aus Fig. 3,
- Fig. 5: eine Aufsicht auf die Dampferzeugereinheit aus Fig. 2 in verkleinertem Maßstab,
- Fig. 6: einen Axialschnitt durch eine zweite Ausführungsform der Dampferzeugereinheit,
- Fig. 7: einen Ausschnitt zu Fig. 6 in vergrößertem Maßstab,
- Fig. 8: bis Fig. 12 Ausschnitte von Axialschnitten durch unterschiedliche Ausführungen von Vertellerrädern mit zwei Wasserführungsflächen,
- Fig. 13: einen Axialschnitt durch eine alternative Ausführung eines Stromteilers,
- Fig. 14: einen Axialschnitt durch eine dritte Ausführung eines Stromteilers,
- Fig. 15: eine Aufsicht auf eine vierte Ausführung eines Stromteilers und
- Fig. 16: eine Seitenansicht zu Fig. 15.

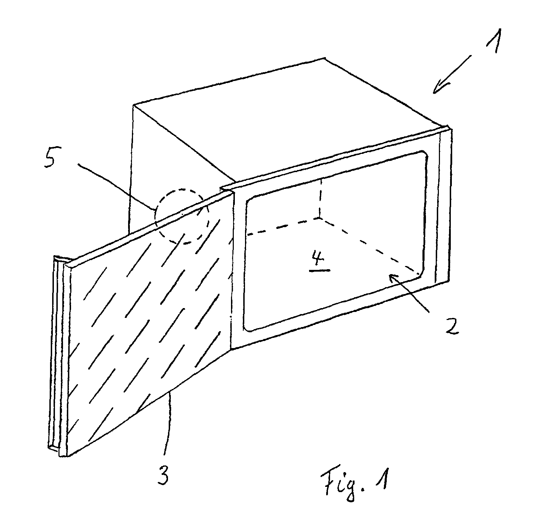

Figur 1 zeigt einen Dampfgarofen 1 mit einem von einer Muffel 2 umschlossenen, durch eine Tür 3 verschließbaren Dampfgarraum 4. In dem Dampfgarraum 4 ist an einer Muffelwand eine Dampferzeugereinheit 5 angeordnet. Bevorzugt ist sie an einer Muffelseitenwand angebracht, damit sie für eine erforderliche Reinigung gut zugänglich ist.

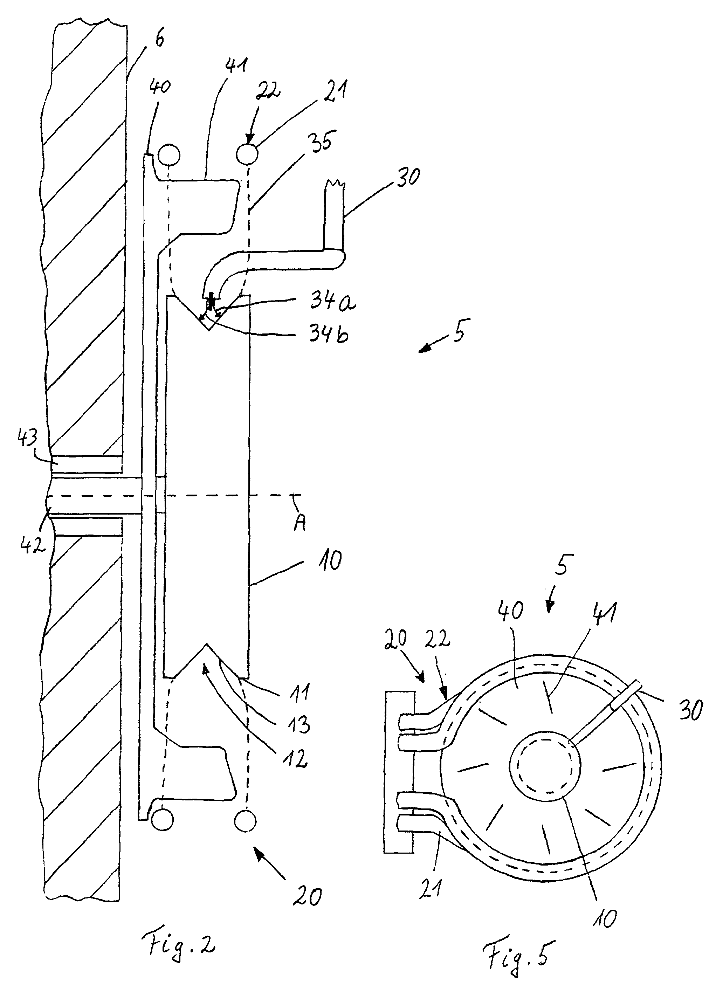

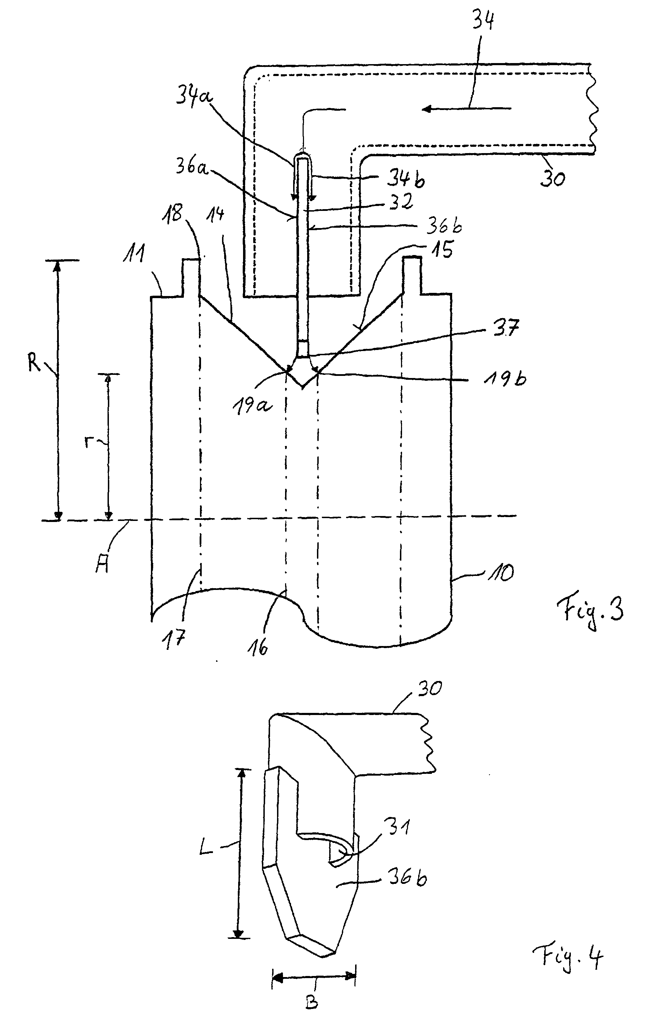

In den Figuren 2 und 5 ist eine erste Ausführungsform der Dampferzeugereinheit 5 im Axialschnitt dargestellt. Figur 3 zeigt einen vergrößerten Ausschnitt mit einer abgewandelten Profilierung der Mantelfläche 11 des Verteilerrades 10. Die Dampferzeugereinheit 5 weist als wesentliche Komponenten eine Wasserzuführungsleitung 30, ein Verteilerrad 10 und einen ringförmigen Heizkörper 20 auf. Ferner hat die dargestellte Ausführungsform ein Lüfterrad 40 mit Lüfterschaufeln 41 zum Umwalzen des erzeugten Dampfes in dem Dampfgarraum 4. Das Verteilerrad 10 und das Lüfterrad 40 sind auf einer gemeinsamen Achse 42 befestigt, die in einem in der Muffelwand 6 befindlichen Lager 43 drehbar gelagert ist und von einem nicht dargestellten elektrischen Antriebsmotor angetrieben wird. Die geometrische Drehachse des Verteilerrades 10 und des Lüfterrades 40 ist mit A bezeichnet. Für die Umwälzung des erzeugten Dampfes kann auch eine gesonderte Gebläseeinrichtung vorgesehen sein.

In einer Mantelfläche 11 des als separates Bauteil ausgebildeten Verteilerrades 10 ist eine umlaufende Vertiefung 12 ausgebildet, die von einer Wand 13 begrenzt wird. Ein derartiges Verteilerrad 10 läßt sich als einstückiges Drehteil einfach und kostengünstig herstellen.

Das durch eine Wasserzuführungsleitung 30 zugeführte Was- ser 34 wird durch einen Stromteiler 32 geteilt und trifft auf die Mantelfläche 11 an zwei Aufgabestellen 19a und 19b auf. Die Gesamtheit der Aufgabestellen 19a bzw. 19b bei einer vollen Umdrehung des Verteilerrades 10 definieren auf der Mantelfläche 11 jeweils einen Wasseraufgabekreis 16 mit dem Aufgaberadius r.

Auf der Mantelfläche 11 sind zwei umlaufende Abreißkanten 18 ausgebildet. Sie bestimmen auf der Mantelfläche 11 jeweils einen Schleuderkreis 17, zu dem das Wasser über eine zumindest abschnittsweise in Richtung auf die Drehachse A geneigte, ringförmige Wasserführungsfläche 14 geführt und von dem aus es von dem Verteilerrad 10 weggeschleudert wird.

Der Radius des Schleuderkreises 17 wird als Schleuderradius R bezeichnet und ist großer als der Aufgaberadius r. Der Durchmesser des Schleuderkreises 17 kann in Abhängig- keit von der baulichen Größe der Dampferzeugereinheit 5 variieren. Je größer er ist, umso niedriger kann die Drehzahl des Verteilerrades 10 seine für Haushaltsgeräte hat sich in der Praxis ein Verteilerrad 10 bewährt, dessen Schleuderkreisdurchmesser zwischen 30 mm und 80 mm beträgt. Selbstverständlich müssen die Wasserführungsflächen 14 nicht symmetrisch zueinander ausgebildet sein. Durch die symmetrische Ausbildung wird jedoch begünstigt, daß von beiden Schleuderkreisen 17 im wesentlichen jeweils gleichviel Wasser abgeschleudert wird.

Die Wasserzuführungsleitung 30, die von einem Wasserleitungsnetz oder einem Wasservorratsgefäß versorgt wird, führt der Mantelfläche 11 des Verteilerrades 10 Wasser zu, vorzugsweise als kontinuierlicher Strom. Dies geschieht bevorzugt durch eine gemeinsame Wasserführungsleitung 30. Um eine gleichmäßige Wasserzufuhr auf beide Wasserführungsflächen 14 zu erreichen, befindet sich an ihrer Mündung 31 ein Stromteiler 32, der in Figur 4 in perspektivischer Darstellung zu erkennen ist. Er weist zwei parallele, gegenüberliegende Leitflächen 36a, 36b auf, die parallel zu den Ebenen der Kreise 16, 17 orientiert sind. Der Stromteiler 32 ragt derart in die Mündung hinein, daß das zugeführte Wasser 34 in zwei im wesentlichen gleich starke Wasserteilströme 34a, 34b aufgeteilt wird.

Die Leitflächen 36a, 36b, haben eine maximale Länge L und eine maximale Breite B. Bevorzugt nimmt die Breite in Richtung auf die Vertiefung 12 ab, wodurch die längs der Leitflächen 36a, 36b strömenden Wasserteilströme 34a, 34b fokussiert werden. Mindestens der Stromteiler 32, bevorzugt auch die Mündung 31 ragt in die Vertiefung 12 des Verteilerrades 10 hinein. Dadurch wird der störende Einfluß durch Luftströmungen (insbesondere infolge der Rotation des Lüfterrades 40) reduziert. Dabei sollten sich Abgabestellen 37, an denen sich das Wasser jeweils von dem Stromteilers 32 löst, so dicht an dem jeweiligen Wasseraufgabekreis 16 befinden, daß die abgelösten Wasserteilströme 34a, 34b möglichst wenig durch die Luftströmunabgelenkt werden. In der Praxis bewahrt haben sich Abstände von weniger als 5 mm zwischen der Abgabestelle 37 und ihrem korrespondierenden Wasseraufgabekreis 16.

Das Lüfterrad 40 ist vorzugsweise als Radiallüfter derartig ausgebildet, daß die Luft längs der Drehachse A angesaugt und in radialer Richtung weggeblasen wird. Die da- mit verbundene Luftströmung wird im Bereich der Mündung 31 durch die beschriebene Orientierung des Stromteilers 32 wirksam reduziert. Er wirkt dadurch zugleich als Strömungsbarriere. Dies wird bei dem gezeigten Stromteiler 32 dadurch optimiert, daß seine maximale Breite B größer als die Breite der Wasserzuführungsleitung 30 im Bereich ihrer Mündung 31 ist, so daß er seitlich über diese hinaus- ragt. Alternativ kann im Mündungsbereich der Wasserzuführungsleitung 30 eine gesonderte Strömungsbarriere vorgesehen sein.

Die in den Figuren 2 his 5 gezeigte Art der Wasserzuführung ist konstruktiv unaufwendig und bewirkt eine gleich- mäßige Aufteilung des zugeführten Wassers 34 auf die bei- den Wasserführungsflächen 14. Selbstverständlich ist es auch möglich, für jede Wasserführungsfläche eine separate Wasserzuführungsleitung vorzusehen, so daß auf einen Stromteiler verzichtet werden kann. Mehrere separate Wasserzuführungsleitungen können nötig sein, wenn die Mantelfläche anders profiliert ist, beispielsweise wenn die Wasseraufgabekreise voneinander abgewandt sind oder wenn mehr als zwei Wasserführungsflächen (zum Abschleudern von Wasser auf drei oder mehr Heizringe) vorgesehen sind.

Der in den Figuren 2 und 5 zu erkennende Ringheizkörper 20 weist zwei Heizwendeln 21 auf. Eine durchgehende Heizwendel 21 ist eine bevorzugte Ausführung eines das Verteilerrad 10 umgebenden Heizringes 22. Alternativ kann der Heizring auch aus mehreren Segmenten bestehen, die unterschiedliche Kreisabschnitte des Verteilerrades abdecken. Die dargestellten Wendeln 21 umgeben das Verteilerrad 10 in radialem Abstand zur Drehachse A im wesentlichen vollständig und fluchten jeweils mit einem Schleuderkreis 17 des Verteilerrades 10, d.h. sie sind im wesentlichen jeweils in der Ebene eines Schleuderkreises 17 angeordnet.

Im Betrieb des Dampfgarofens 1 rotiert das Verteilerrad 10 mit hoher Drehzahl um die Achse 42. Die Drehzahl beträgt typischerweise zwischen 1.800 und 2.000 U/min. Das durch die Wasserzuführungsleitung 30 als Wasserstrom zugeführte Wasser 34 wird durch den Stromteiler 32 in zwei definierte Teilströme 34a, 34b aufgeteilt, die durch die Leitflächen 36a, 36b im wesentlichen in die Richtung der Wasseraufgabekreise 16 geleitet werden. Die schnelle Rotation des Verteilerrades 10 verursacht eine Sogwirkung auf die Wasserteilströme 34a, 34b. Dies hat zur Folge, daß sie nach ihrem Ablösen von dem Stromteiler 32 an den Abgabestellen 37 nicht entsprechend ihrer durch die Leitflächen 36a, 36b vorgegebenen Strömungsrichtung weiterströmen, sondern einen im Axialschnitt leicht bogenförmigen Verlauf nach außen zeigen und an den Wasseraufgabekreisen 16 auf die Mantelfläche 11 treffen. Durch die Neigung der Wasserführungsflächen 14 und die durch die Rotation des Verteilerrades 10 verursachte Fliehkraft wird das Wasser auf den Oberflächen 15 der Wasserführungsflächen 14 verteilt und auf ihnen als Wasserfilm zu den Schleuderkreisen 17 geführt. Durch das Zusammenwirken der Fliehkraft mit den umlaufenden Abreißkanten 18 reißt das geführte Wasser unter definierter Tropfenbildung an den Schleuderkreisen 17 von dem Verteilerrad 10 ab. Das auf die jeweils zugeordnete Wendel 21 auftreffende Wasser wird verdampft. Der erzeugte Dampf wird durch das Lüfterrad 40 im Dampfgarraum gleichmäßig verteilt.

Überraschenderweise hat sich gezeigt, daß die Flugbahn des abgeschleuderten Wassers 35 durch die rotierenden Schaufeln 41 des Lüfterrades 40 so wenig beeinflußt wird, daß das Wasser trotz der hohen Rotationsgeschwindigkeit des Lüfterrades 40 konzentriert auf die Wendel 21 des Heizkörpers 20 auftrifft. Die hierfür optimale Anordnung und Formgebung der Lüfterschaufeln 41 läßt sich empirisch erproben. Mit einem für Heißluftöfen gebräuchlichen Lüfterrad wurden gute Ergebnisse erreicht.

Der Radius des Heizkörpers 20 sollte im Hinblick auf eine möglichst kurze Flugbahn des Wassers nicht zu groß sein. Der Minimalradius ist durch die Abmessungen des Lüfterrades 40 bestimmt. Überraschenderweise hat sich gezeigt, daß auch mit einem Radius des Heizkörpers 20, der mehr als doppelt so groß wie der Radius des Schleuderkreises 17 ist, noch gute Ergebnisse erreicht werden.

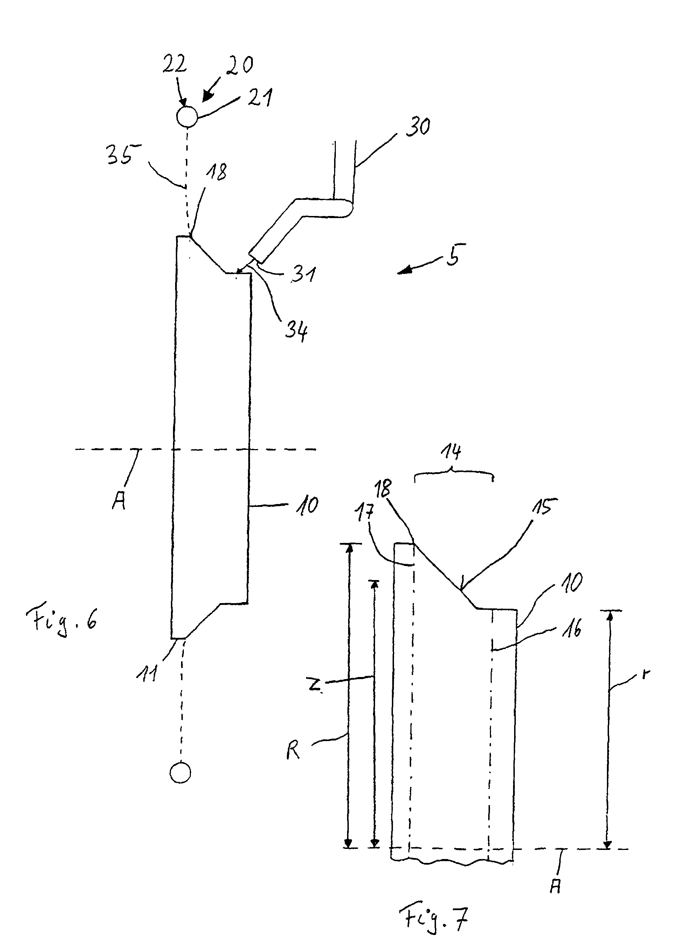

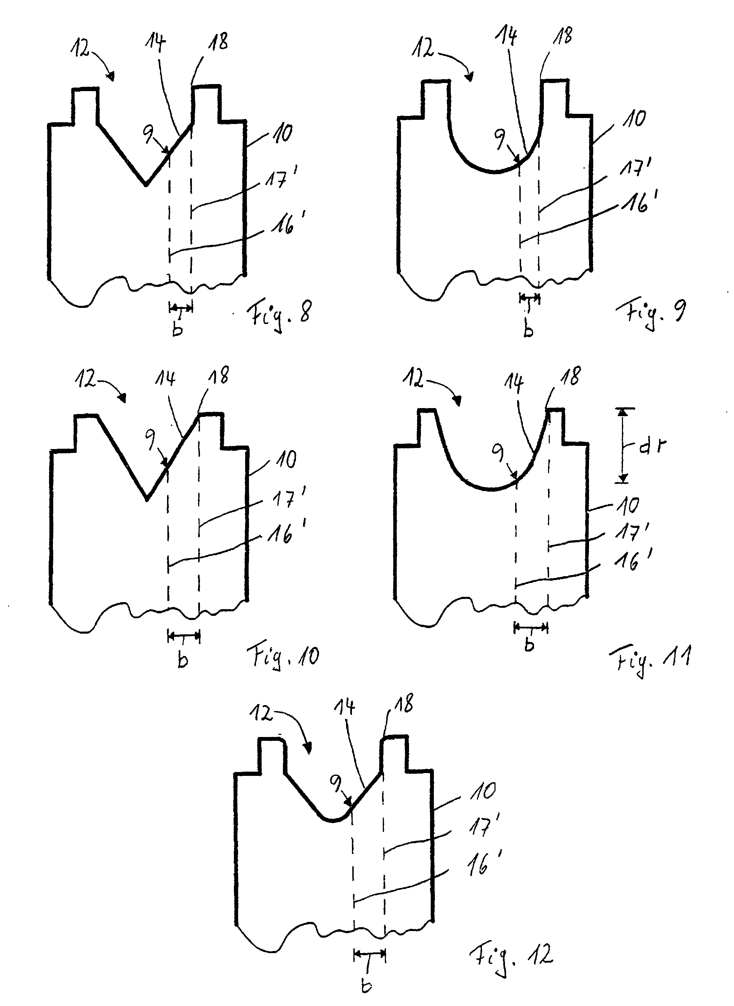

Die Figuren 6 und 7 zeigen eine Ausführungsform einer Dampferzeugereinheit 5 für einen Ringheizkörper 20 mit nur einem Heizring 22. Das Verteilerrad 10 weist auch hier eine Wasserführungsfläche 14 auf, die einerseits von dem Wasseraufgabekreis 16 und andererseits von dem Schleuderkreis 17 begrenzt wird. Zu erkennen ist, daß die dargestellte ringförmige Wasserführungsfläche 14 nur abschnittsweise in Richtung auf die Drehachse A geneigt ist. Der Wasseraufgabekreis 16 befindet sich auf einem zylinderförmigen Teilabschnitt. Die Wasserführungsfläche 14 ist bevorzugt kontinuierlich glatt ausgebildet. Der Ausdruck "kontinuierlich glatt" ist dabei nicht im streng mathematischen, sondern im technischen Sinn zu verstehen und bedeutet, daß auf der Wasserführungsfläche 14 keine Kanten oder andere Unebenheiten vorhanden sind, an denen der Wasserfilm abreißt, bevor er den Schleuderkreis 17 erreicht hat. In dem in Richtung auf die Drehachse A ge- neigten Abschnitt der Wasserführungsfläche 14 ändert sich ihr Radius z bevorzugt monoton.

Die Mündung 31 der Wasserzuführungsleitung 30 ist auf den Wasseraufgabekreis 16 gerichtet. Bei ihrer Anordnung ist zu berücksichtigen, daß das zugeführte Wasser 34 durch die Schwerkraft und die in der Nähe der Mantelfläche 11 herrschende Luftströmung abgelenkt wird. Deshalb sollte sich die Mündung 31 dicht an dem Wasseraufgabekreis 16 befinden.

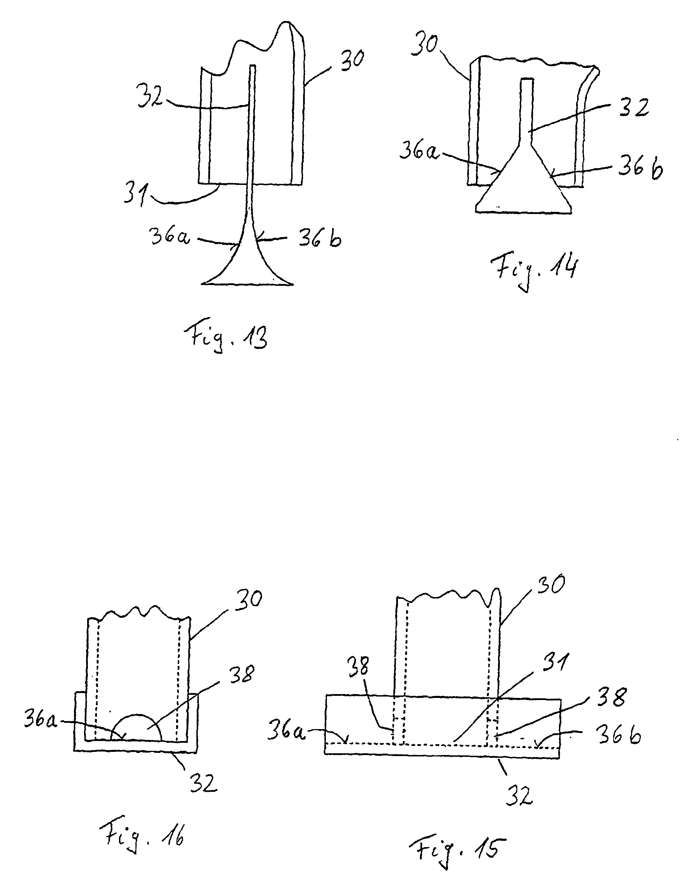

Die Figuren 8 his 12 zeigen Ausschnitte van Axialschnitten durch unterschiedliche Ausführungen van Verteilerrädern 10 mit zwei Wasserführungsflächen 14, wobei die Mantelfläche 11 jeweils durch eine umlaufende Vertiefung 12 profiliert ist. Die Figuren zeigen im wesentlichen V-förmige Vertiefungen 12 (Figuren 8 und 10), im wesentlichen U-förmige Vertiefungen 12 (Figuren 9 und 11) oder eine Kombination beider Formen (Figuren 12). Zur Verdeutlichung der Lage und Ausbildung der Wasserführungsflächen sind in den Figuren die Projektionen der jeweiligen Wasseraufgabekreise 16' und der dazugehörigen Schleuderkreise 17' in die Schnittebene (jeweils auf einer Seite der Vertiefung) gestrichelt dargestellt. Die Pfeile 9 deuten schematisch jeweils einen auftreffenden Wasserteilstrom an.

Zu erkennen ist, daß der in Richtung auf die Drehachse A geneigte konische Abschnitt der Wasserführungsfläche 14 nicht streng kegelstumpfförmig ausgebildet sein muß, sondern auch im wesentlichen konkav, d.h. in Richtung auf die Drehachse A gewölbt, sein kann (Figuren 9 und 11). Ein im wesentlichen konkaver Abschnitt einer Wasserführungsfläche 14 kann aber auch aus mehreren kegelstumpfförmigen Teilabschnitten mit jeweils unterschiedlicher Neigung zusammengesetzt sein.

Die Breite b der Wasserführungsfläche 14 wird durch den Abstand zwischen Aufgaberadius r und Schleuderradius R auf der Drehachse A bestimmt. In den Figuren ist zu erkennen, daß die Breite b in axialer Richtung bei im wesentlichen konstanter Tiefe der Vertiefung 12 in Abhängigkeit von der Ausbildung der Wasserführungsfläche 14 variieren kann. Dabei sollte sie so breit sein, daß sich das aufgebrachte Wasser auf ihr ausreichend verteilt. Je schmaler sie ist, umso schlechter ist ihre Verteilungswirkung. In der Praxis haben sich Wasserführungsflächen 14 bewahrt, deren Breite mindestens 3 mm beträgt.

Die Neigung der Wasserführungsflächen 14 zu der Drehachse A muß so groß sein, daß der Wasserfilm nicht vorzeitig abreißt und ungerichtet abgeschleudert wird. Vorzugsweise sollte der Neigungswinkel der Wasserführungsfläche mindestens etwa 20° betragen. Einen nicht geneigten (zylindrischen) Abschnitt sollte die Wasserführungsfläche (wenn überhaupt) nur in der Nachbarschaft des Wasseraufgabekreises 16 haben.

Die Abreißkante 18 an dem Schleuderkreis 17 ist vorzugsweise scharfkantig, wobei es vorteilhaft ist, wenn der letzte Abschnitt der Wasserführungsfläche vor der Abreiß- kante 18 im wesentlichen in radialer Richtung verläuft (Figuren 3, 8 und 9). Eine leichte (z.B. fertigungsbedingte) Rundung der Abreißkante (wie in Figur 12 dargestellt) ist unschädlich, wenn sich das Wasser hinreichend gezielt von ihr löst.

Die in den Figuren 8 bis 12 gezeigten Ausbildungen von Wasserführungsflächen können auch in einem Dampfgarofen mit nur einer Wendel eingesetzt werden.

Bei den in den Figuren 13 und 14 dargestellten alternativen Ausführungen von Stromteilem 32 sind die Leitflächen 36a, 36b an ihrem verteilerradseitigen Ende jeweils nach außen, d.h. in Richtung auf die Wand der Verteilerradvertiefung, gerichtet.

Der in den Figuren 15 und 16 zu erkennende Stromteiler 32 verschließt die Mündung 31 der Wasserzuführungsleitung 30 in Strömungsrichtung des Wassers. Durch einander gegenüberliegende seitliche Öffnungen 38 in der Wasserzuführungsleitung 30 können Wasserteilströme austreten, die durch quer zur Mündung 31 angeordneten Leitflächen 36a, 36b auf die Wasseraufgabekreise gerichtet werden.

## Patentansprüche

1. Dampfgarofen mit einem Dampfgarraum (4) und einer Dampferzeugereinheit (5), die einen Rotationskörper (10), einen den Rotationskörper (10) umgebenden Heizkörper (20) und eine Wasserzuführungsleitung (30) zum Zuführen von Wasser auf eine Außenmantelfläche (11) des Rotationskörpers (10) aufweist, bei dessen Betrieb der Rotationskörper (10) mit hoher Drehzahl um eine Drehachse (A) rotiert, auf seine Außenmantelfläche (11) aufgebrachtes Wasser von dieser abgeschleudert wird und dabei auf den Heizkörper (20) auftreffendes Wasser verdampft, **dadurch gekennzeichnet, dass** die Außenmantelfläche (11) in axialer Richtung eine mindestens abschnittsweise in Richtung auf die Drehachse (A) geneigte ringförmige Wasserführungsfläche (14) aufweist, die einerseits von einem Wasseraufgabekreis (16) und andererseits von einem Schleuderkreis (17) begrenzt wird, wobei der Radius (r) des Wasseraufgabekreises (16) kleiner als der Radius (r) des Schleuderkreises (17) ist, die Wasserzuführungsleitung (30) so ausgebildet ist, dass das Wasser (34) an dem Wasseraufgabekreis (16) auf die Außenmantelfläche (11) auftrifft, wobei es ausgehend von dem Wasseraufgabekreis (16) über die Wasserführungsfläche (14) in Richtung auf den Schleuderkreis (17) geführt wird, die Außenmantelfläche (11) an dem Schleuderkreis (17) eine Abreißkante (18) aufweist, so dass das Wasser an dem Schleuderkreis (17) von dem Rotationskörper (10) weggeschleudert wird und der Heizkörper (20) in radialer Richtung mit dem Schleuderkreis (17) derartig fluchtet, dass von dem Schleuderkreis (17) weggeschleudertes Wasser (35) auf ihn auftrifft.

2. Dampfgarofen nach Anspruch 1, **dadurch gekennzeichnet, dass** die Mantelfläche (11) zwischen dem Wasseraufgabekreis (16) und dem Schleuderkreis (17) kontinuierlich glatt ausgebildet ist.

3. Dampfgarofen nach einem der vorhergehenden Ansprüche, **dadurch gekennzeichnet, dass** der Radius (z) der Wasserführungsfläche (14) von dem Wasseraufgabekrels (16) his zu dem Schleuderkreis (17) monoton zunimmt.

4. Dampfgarofen nach einem der vorhergehenden Ansprüche, **dadurch gekennzeichnet, dass** er einen Lüfter mit einem Lüfterrad (40) aufweist, das im Betrieb des Dampfgarofens (1) mit dem Rotationskörper (10) um eine gemeinsame Drehachse (A) rotiert.

5. Dampfgarofen nach einem der vorhergehenden Ansprüche, **dadurch gekennzeichnet, dass** im Bereich einer Mündung (31) der Wasserzuführungsleitung (30) eine Strömungsbarriere vorgesehen ist, die derart ausgebildet und angeordnet ist, dass eine das zugeführte Wasser ablenkende Luftströmung reduziert wird.

6. Dampfgarofen nach einem der vorhergehenden Ansprüche, **dadurch gekennzeichnet, dass** bei dessen Betrieb das Wasser durch die Wasserzuführungsleitung (30) als kontinuierlicher Strom zugeführt wird.

7. Dampfgarofen nach einem der vorhergehenden Ansprüche, **dadurch gekennzeichnet, dass** der Rotationskörper (10) zwei Wasserführungsflächen (14) aufweist, deren Schleuderkreise (17) in radialer Richtung derartig mit zwei Heizringen (22) des Heizkörpers (20) fluchten, dass von diesen weggeschleudertes Wasser (35) auf den jeweils zugeordneten Heizring (22) auftrifft.

8. Dampfgarofen nach Anspruch 7, **dadurch gekennzeichnet, dass** die Wasseraufgabekreise (16) der beiden Wasserführungsflächen (14) einander zugewandt sind, so dass zwischen den beiden Schleuderkreisen (17) eine Vertiefung (12) gebildet wird, deren mindestens abschnittsweise geneigte Wand (13) die beiden Wasserführungsflächen (14) bilden.

9. Dampfgarofen nach Anspruch 8, **dadurch gekennzeichnet, dass** zur Zuführung des Wassers eine für beide Wasserführungsflächen (14) gemeinsame Wasserzuführungsleitung (30) vorgesehen ist und die Wasserzuführungsleitung (30) an ihrer Mündung einen Stromteiler (32) aufweist, durch den das als Wasserstrom zugeführte Wasser (34) in zwei Teilströme (34a, 34b) geteilt wird, die auf die Wasseraufgabekreise (16) der beiden Wasserführungsflächen (14) gerichtet sind.

10. Dampfgarofen nach den Ansprüchen 5 und 9, **dadurch gekennzeichnet, dass** der Stromteiler (32) zugleich als Strömungsbarriere ausgebildet ist.

11. Dampfgarofen nach einem der Ansprüche 8 bis 10, **dadurch gekennzeichnet, dass** die Mündung (31) der Wasserzuführungsleitung (30) in die Vertiefung (12) hin- einragt.

## Claims

1. Steam cooking oven with a steam cooking chamber (4) and a steam generating unit (5), which comprises a rotational body (10), a heating body (20) surrounding the rotational body (10), and a water feed duct (30) for feeding water to an outer circumferential surface (11) of the rotational body (10), in the operation of which the rotational body (10) rotates at high rotational speed about an axis (A) of rotation, water applied to the outer circumferential surface (11) thereof is centrifuged therefrom and in that case water impinging on the heating body (20) evaporates, **characterised in that** the outer circumferential surface (11) has in axial direction an annular water guide surface (14) which is inclined at least in sections in direction towards the rotational axis (A) and which is bounded on the one hand by a water feed circle (16) and on the other hand by a centrifuge circle (17), wherein the radius (r) of the water feed circle (16) is smaller than the radius (r) of the centrifuge circle (17), the water feed duct (30) is so constructed that the water (34) impinges at the water feed circle (16) on the outer circumferential surface (11), wherein going out from the water feed circle (16) it is guided over the water guide surface (15) in direction towards the centrifuge circle (17), which outer circumferential surface (11) has a separation edge (18) at the centrifuge circle (17) so that the water is centrifuged away from the rotational body (10) at the centrifuge circle (17) and the heating body (20) is aligned in radial direction with the centrifuge circle (17) in such a manner that the water (35) centrifuged away from the centrifuge circle (17) impinges on the heating body.

2. Steam cooking oven according to claim 1, **characterised in that** the circumferential surface (11) between the water feed circle (16) and the centrifuge circle (17) is formed to be continuously smooth.

3. Steam cooking oven according to one of the preceding claims, **characterised in that** the radius (z) of the water guide surface (14) monotonically increases from the water feed circle (16) up to the centrifuge circle (17).

4. Steam cooking oven according to one of the preceding claims, **characterised in that** it comprises a fan with a fanwheel (40) which in operation of the steam cooking oven (1) rotates together with the rotational body (10) about a common axis (A) of rotation.

5. Steam cooking oven according to one of the preceding claims, **characterised in that** a flow barrier is provided in the region of a mouth (31) of the water feed duct (30) and is constructed and arranged in such a manner that an air flow deflecting the supplied water is reduced.

6. Steam cooking oven according to one of the preceding claims, **characterised in that** in operation thereof the water is fed by the water feed duct (30) as a continuous flow.

7. Steam cooking oven according to one of the preceding claims, **characterised in that** the rotational body (10) has two water guide surfaces (14), the centrifuge circle (17) of which is aligned in radial direction with two heating rings (22) of the heating body (20) in such a manner that water (35) centrifuged away therefrom impinges on the respectively associated heating ring (22).

8. Steam cooking oven according to claim 7, **characterised in that** the water feed circles (16) of the two water guide surfaces (14) face one another so that a depression (12), the wall (13) - which is inclined at least in sections - of which forms the two water guide surfaces (14), is formed between the two centrifuge circles (17).

9. Steam cooking oven according to claim 8, **characterised in that** a water feed duct (30) common to the two water guide surfaces (14) is provided for feed of the water and the water feed duct (30) has at the mouth thereof a flow divider (32) by which the water (34) fed as a water flow is divided into two part flows (34a, 34b) which are directed towards the water feed circles (16) of the two water guide surfaces (14).

10. Steam cooking oven according to claims 5 and 9, **characterised in that** the flow divider (32) is at the same time formed as a flow barrier.

11. Steam cooking oven according to one of claims 8 to 10, **characterised in that** the mouth (31) of the water feed duct (30) protrudes into the depression (12).

## Revendications

1. Four de cuisson à vapeur avec un espace pour cuisson à la vapeur (4) et une unité génératrice de vapeur (5) comprenant un corps rotatif (10), un corps de chauffage (20) entourant le corps rotatif (10) et une conduite d'alimentation en eau (30) pour amener de l'eau sur une enveloppe extérieure (11) du corps de rotation (10), lors du fonctionnement duquel le corps rotatif (10) tourne à grande vitesse de rotation autour d'un axe de rotation (A), de l'eau apportée sur son enveloppe extérieure (11) est projetée par celle-ci et l'eau venant touchant le corps de chauffage (20) se vaporise, **caractérisé en ce que** l'enveloppe (11) extérieure présente, en direction axiale, une surface de guidage de l'eau (14) annulaire et inclinée, au moins en partie, vers l'axe de rotation (A), ladite surface étant limitée, d'une part, par un cercle d'apport d'eau (16) et, d'autre part, par un cercle de projection (17), le rayon (r) du cercle d'apport d'eau (16) étant inférieur au rayon (r) du cercle de projection (17), la conduite d'alimentation en eau (30) étant configurée de manière qu'au niveau du cercle d'apport d'eau (16) l'eau (34) arrive sur l'enveloppe extérieure (11) et, partant du cercle d'apport d'eau (16), est conduite vers le cercle de projection (17) par l'intermédiaire de la surface de guidage de l'eau (14), l'enveloppe extérieure (11) présentant, au niveau du cercle de projection (17), une arête de rupture (18) de sorte que l'eau est projetée par le corps rotatif (10) au niveau du cercle de projection (17),et le corps de chauffage (20) étant en alignement radial avec le cercle de projection (17) de manière telle que l'eau (35) projetée au départ du cercle de projection (17) vient le toucher.

2. Four de cuisson à vapeur selon la revendication 1, **caractérisé en ce que** l'enveloppe (11) est configurée de manière à être plane sans interruption entre le cercle d'apport d'eau (16) et le cercle de projection (17).

3. Four de cuisson à vapeur selon l'une des revendications précédentes, **caractérisé en ce que** le rayon (z) de la surface de guidage de l'eau (14) augmente monotonement du cercle d'apport d'eau (16) vers le cercle de projection (17).

4. Four de cuisson à vapeur selon l'une des revendications précédentes, **caractérisé en ce qu'**il présente un ventilateur avec une roue de ventilateur (40) qui tourne avec le corps rotatif (10) autour d'un axe de rotation commun (A) lors du fonctionnement du four de cuisson à vapeur (1).

5. Four de cuisson à vapeur selon l'une des revendications précédentes, **caractérisé en ce qu'**au niveau d'un orifice (31) de la conduite d'alimentation en eau (30) est prévue une barrière contre les courants d'air, laquelle est configurée et placée de manière telle qu'un courant d'air déviant l'eau amenée est réduit.

6. Four de cuisson à vapeur selon l'une des revendications précédentes, **caractérisé en ce que**, lors de son fonctionnement, l'eau est amenée par la conduite d'alimentation en eau (30) sous la forme d'un écoulement continu.

7. Four de cuisson à vapeur selon l'une des revendications précédentes, **caractérisé en ce que** le corps rotatif (10) présente deux surfaces de guidage de l'eau (14) dont les cercles de projection (17) s ont a lignés, en direction radiale, avec deux anneaux de chauffage (22) du corps de chauffage (20) de manière telle que l'eau (35) projetée par ceux-ci vient toucher l'anneau de chauffage (22) associé à chacun.

8. Four de cuisson à vapeur selon la revendication 7, **caractérisé en ce que** les cercles d'apport d'eau (16) des deux surfaces de guidage de l'eau (14) sont situés en vis-à-vis de sorte qu'entre les deux cercles de projection (17) se forme une gorge (12) dont la paroi (13) au moins partiellement inclinée forme les deux surfaces de guidage de l'eau (14).

9. Four de cuisson à vapeur selon la revendication 8, **caractérisé en ce qu'**est prévue, pour l'alimentation en eau, une conduite d'alimentation en eau (30) commune pour les deux surfaces de guidage de l'eau (14) et **en ce que** ladite conduite d'alimentation en eau (30) présente, à son orifice, un séparateur d'écoulement (32), lequel sépare en deux écoulements partiels (34a, 34b) l'eau amenée sous la forme d'un écoulement d'eau, lesdits écoulements partiels étant dirigés sur les cercles d'apport d'eau (16) des deux surfaces de guidage de l'eau (14).

10. Four de cuisson à vapeur selon les revendications 5 et 9, **caractérisé en ce que** le séparateur d'écoulement (32) est en même temps réalisé comme barrière contre les courants d'air.

11. Four de cuisson à vapeur selon l'une des revendications 8 à 10, **caractérisé en ce que** l'orifice (31) de la conduite d'alimentation en eau (30) pénètre dans la gorge (12).
